# EUROPÄISCHE PATENTANMELDUNG

(11) **EP 3 581 357 A1**
(43) Veröffentlichungstag der Anmeldung: **18.12.2019**
(21) Anmeldenummer: 19176787.0
(22) Anmeldetag: 27.05.2019
(51) Int. Cl.: B29C 44/56

(54) **VORRICHTUNG ZUM LAGERN UND TRANSPORT VON GROSSVOLUMIGEN SCHAUMSTOFFBLÖCKEN**

(30) Priorität: 13.06.2018 DE 102018209421
(71) Anmelder: Albrecht Bäumer GmbH & Co. KG Spezialmaschinenfabrik, 57258 Freudenberg (DE)
(72) Erfinder: Moisel, Christoph, 50933 Köln (DE)
(74) Vertreter: Grosse, Wolf-Dietrich Rüdiger

(57) **Zusammenfassung**

Eine Vorrichtung zum Lagern und Transport von großvolumigen Schaumstoffblöcken (10) mit einer Fördervorrichtung (15) und einem Lager soll so weitergebildet werden, dass auf sichere, einfache, kostengünstige und Platz sparende Weise die Lagerung und der Transport der großvolumigen, weichen, viskoelastischen Schaumstoffblöcken gewährleistet ist. Dazu wird vorgeschlagen mindestens eine mobile Lagerbox (1) zur Aufnahme mindestens eines Schaumstoffblocks (10) an einer Beladeposition, und eine Transportvorrichtung zum Transport der Lagerbox (1) von der Beladeposition in mindestens ein Bodenlager (23) vorzusehen.

## Beschreibung

Die Erfindung betrifft eine Vorrichtung zum Lagern und Transport von großvolumigen Schaumstoffblöcken mit einer Fördervorrichtung und einem Lager wie einem Reaktionslager für die Schaumstoffblöcke nach dem Schäumvorgang und nach dem Ablängen

Sehr weiche, viskoelastische Schaumstoffe und gerade frisch hergestellte Schaumstoffblöcke, die nach dem Schäumvorgang noch nicht ganz ausgehärtet und aufgrund der verbleibenden Reaktionswärme noch weiter ausreifen und abkühlen müssen, werden heutzutage als großvolumige Schaumstoffblöcke in Regallagern gelagert. Diese werden mit Hilfe eines Regalbediengeräts über die Längsachse befüllt. Derartige Lager sind beispielsweise aus Wikipedia unter https://de.wikipedia.org/wiki/Langgutlager in der Version vom 22. Januar 2018 bekannt.

Block- oder Wabenlager sind Lagersysteme, bei denen das Material in Kassetten, einem offenen, länglichen Behälter, in einem wabenartig angeordneten Regalblock nebeneinander angeordnet ist. Der Zugriff zu dem gelagerten Material erfolgt ebenfalls mittels eines Regalbediengerätes als Fördervorrichtung, das stirnseitig vor dem Wabenlager horizontal, vertikal und auch diagonal verfahrbar ist. Aufgrund der Möglichkeit der Diagonalfahrt vor dem Regalblock des Wabenlagers sowie des unmittelbaren Zugriffs auf jede einzelne Kassette ergibt sich eine hohe Ein- und Auslagerleistung.

Die Frontseite von derartigen Wabenlagern sieht schachbrettartig aus. In den Block- oder Wabenlagern sind die einzelnen Regaleinschübe mit angetriebenen Transportbändern ausgestattet. Typische Abmessungen der einzulagernden Blöcke betragen etwa zwischen 2m und 120m Länge, bis zu 2,5m Breite und bis zu einer Höhe von 1,5m.

Nachteile des Systems sind der hohe Platzbedarf ausschließlich für das Regalbediengerät, die viele Antriebstechnik in jedem der Regaleinschübe und die wartungsbedürftigen Bänder sowie eine hohe nötige Variantenvielfalt insbesondere an Regalbediengeräten. Auch ergibt sich ein hoher Projektierungsaufwand der Anlagen, da diese jeweils an die spezifischen Dimensionswünschen der Kunden und insbesondere die räumlichen Rahmenbedingungen angepasst werden müssen.

Die Erfindung geht von der Aufgabe aus, eine Vorrichtung der eingangs genannten Art derart auszubilden, dass die Nachteile des bekannten Standes der Technik vermieden werden, dass auf sichere, einfache, kostengünstige und Platz sparende Weise die Lagerung und der Transport von großvolumigen, weichen, viskoelastischen Schaumstoffblöcken gewährleistet ist, und ohne dass die gerade frisch hergestellten Schaumstoffblöcke, die nach dem Schäumvorgang noch nicht ganz ausgehärtet sind, Schaden nehmen.

Die Aufgabe wird erfindungsgemäß für eine Vorrichtung der eingangs genannten Art durch die im Patentanspruch 1 angegebenen Merkmale gelöst. Vorteilhafte Ausbildungen sind in den abhängigen Patentansprüchen angegeben.

Die Aufgabe wird erfindungsgemäß gelöst, indem mindestens eine mobile Lagerbox zur Aufnahme mindestens eines Schaumstoffblocks an einer Beladeposition, und eine Transportvorrichtung zum Transport der Lagerbox von der Beladeposition in mindestens ein Bodenlager vorgesehen sind.

Durch das Vorsehen einer Beladeposition kann das aufwändige, Platz raubende Regalbediengerät eingespart werden. Der Transport der mobilen Lagerboxen erfolgt kostengünstig über üblicherweise vorhandene Portal-, Decken- oder mobile Containerkräne oder beispielsweise über Gabelstapler.

Es hat sich bewährt, dass die Vorrichtung einen Zuführförderer und in der Beladeposition eine Beladevorrichtung aufweist welcher die mindestens eine mobile, stapelbare Lagerbox zuortenbar ist, wobei die Schaumstoffblöcke mittels des Zuführförderers und der Beladevorrichtung in die Lagerboxen einbringbar sind, die dann nach Einbringen der Schaumstoffblöcke von der Transportvorrichtung im Bereich des mindestens einen Bodenlagers ablegbar, auch übereinander stapelbar sind.

Durch die Verwendung eines in der Regel nicht höhen- und querverfahrbaren Zuführförderers wird erheblicher, von einem Regalbediengerät üblicherweise benötigter Platz eingespart. Die Verwendung nur einer Beladevorrichtung erspart die vielen in jedem Regalfach angeordneten, anfälligen Transportbahnen.

Bemerkenswert ist, dass die Lagerboxen in ihrem Bodenbereich im Abstand zueinander angeordnete Laschen mit nach oben gerichteten, unteren Auflageflächen aufweisen, dass die Lagerboxen in ihrem Deckenbereich Querstreben aufweisen, die nach oben gerichtete obere Auflageflächen aufweisen und dass die Querstreben einer ersten Lagerbox beim Aufeinanderstapeln der Lagerboxen in die Zwischenräume der Laschen einer zweiten Lagerbox zur Bildung einer gemeinsamen, nahezu durchgehenden Auflagefläche eingreifbar sind.

In vorteilhafter Weise kann zum Befüllen der Lagerbox mit großvolumigen Schaumstoffblöcken eine Lagerbox auf die Beladevorrichtung mit Förderelementen aufsetzbar sein, die derart weit in die Zwischenräume der Laschen eingreifen, dass die Schaumstoffblöcke beim Einführen in die Lagerbox nur auf den Förderelementen aufliegen.

Dadurch wird ein Schaumstoffbock schonend über die Förderelemente in die Lagerbox eingebracht. Nach Einbringen des Schaumstoffblockes wird die Lagerbox von der Beladevorrichtung abgehoben, und der Schaumstoffblock auf den unteren Auflageflächen abgelegt.

Es hat sich als vorteilhaft erwiesen, dass die Lagerboxen und die Beladevorrichtung Eckbeschläge aufweisen, die beim Stapeln bzw. Aufsetzen mittels Kupplungsadapter zur Sicherung ineinander eingreifen.

Dadurch ist ein einfaches Fügen der Lagerboxen auf der Beladevorrichtung sowie ein übereinander und nebeneinander Fügen im Bereich des Bodenlager ohne aufwändige Justagearbeiten möglich.

Es hat sich bewährt, dass in dem mindestens einem Bodenlager mindestens ein Lagerplatz vorgesehen ist, welcher Erhebungen aufweist, die als Auflagen für die Schaumstoffblöcke derart in die Zwischenräume der Laschen eingreifen, dass die Auflagen die durch die untere Auflagen gebildete Bodenfläche der Lagerboxen derart vergrößert, dass sich für den Schaumstoffblock eine gemeinsame im Wesentlichen durchgehende Auflagefläche ergibt.

Dadurch ist gewährleistet, dass die Schaumstoffblöcke auch in den zuunterst angeordneten Lagerboxen eines Bodenlagers während ihrer Lager und/oder Aushärtezeit vollständig unterseitig abgestützt sind.

Es empfiehlt sich, um die erfindungsgemäße Vorrichtung besser an unterschiedliche Gegebenheiten und Anforderungen anpassen zu können, dass die Lagerboxen aus mindestens einem Modul bestehen, wobei eine aus mehreren Modulen bestehende Lagerbox durch zwischen den Modulen anortenbare Verbindungsmittel zusammengefügt werden können.

Nachahmenswert ist, dass zum Transport der Lagerbox mindestens ein Modul mittels Geschirrs erfassbar ist.

Sind die miteinander verbundenen Module ausreichend biegesteif und stabil, braucht z.B. nur eines der Module mit einem einfachen Geschirr, beispielsweise Containergeschirr ergriffen werden. Bei nicht so biegesteifen Lagerboxen muss ggf. ein aufwändigeres Containergeschirr Anwendung finden, welches jedes Modul ggf. sogar mehrfach ergreifen kann.

Bedeutsam ist, dass die Lagerboxen zumindest in ihrer Höhe variabel einstellbar ausgebildet sind.

Dadurch können nicht gebrauchte Lagerboxen platzsparend gestapelt und/oder transportiert werden. Zudem können weiche Schaumstoffblöcke in den Lagerboxen komprimiert und damit ebenfalls platzsparend transportiert werden.

Die Erfindung ist nachfolgend anhand von in der Zeichnung dargestellten Ausführungsbeispielen näher erläutert. Es zeigen:
- Figur 1: eine schematische Darstellung einer Lagerbox für eine erfindungsgemäße Vorrichtung zum Lagern und Transport von großvolumigen Schaumstoffblöcken,
- Figur 2: eine Seitenansicht der Lagerbox gemäß Figur 1 auf einer Beladevorrichtung zum Befüllen mit großvolumigen Schaumstoffblöcken mittels eines Bandförderers,
- Figur 3: eine Vorderansicht der Anordnung gemäß Figur 2,
- Figur 4: eine Detailansicht der Anordnung gemäß Figur 2,
- Figur 5: eine Seitenansicht der Lagerbox gemäß Figur 2 in ihrer Transportstellung,
- Figur 6: eine Seitenansicht zweier Lagerboxen gemäß Figur 2 in ihrer Lagerstellung,
- Figur 7: eine Detailansicht der Lagerboxen gemäß Figur 6,
- Figur 8: eine vereinfachte Darstellung einer erfindungsgemäß modulartig aufgebauten Vorrichtung,
- Figur 9: die Vorrichtung gemäß Figur 6 mit einem Geschirr zum Transport der Module,
- Figur 10: eine schematische Darstellung eines aus Modulen erstellten Bodenlagers und
- Figur 11: eine Frontansicht der Belade- und Lagervorrichtung.
- Figur 12: eine perspektivische Ansicht eines erfindungsgemäßen Boenlagers

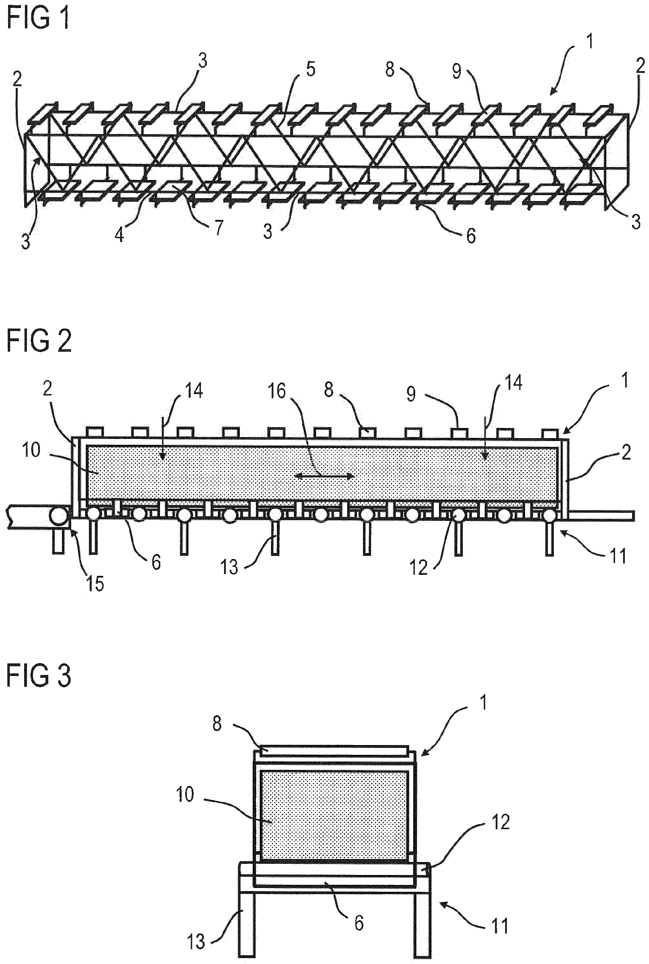

In der Figur 1 ist als Teil einer Vorrichtung zum Lagern und Transport von großvolumigen Schaumstoffblöcken, eine Lagerbox 1, schematisch dargestellt, die zwei Frontrahmen 2 und zwei Seitenteile 3 aufweist, die aus einem Rahmen z.B. Stahlrahmen gebildet aus je zwei Längsstreben 4 bestehen, die zur Versteifung mit Diagonalstreben 5 versehen sind. Unten sind die Seitenteile 3 mit Laschen 6 verbunden, die eine untere Auflagefläche 7 für die nicht dargestellten Schaumstoffblöcke aufweisen und mit Zwischenraum in einem bestimmten Abstand zueinander angeordnet sind, wie noch erläutert wird. Die Seitenteile 3 werden oben, anders als in Fig. 1 dargestellt, von vorzugsweise breiten Querstreben 8 gehalten, deren Breite annähernd die Abmessungen des Abstandes der Laschen 6 aufweisen, so dass die Querstreben 8 zwischen die Laschen 6 geschoben werden können, wie nachfolgend noch beschrieben wird. Die Querstreben 8 weisen eine obere Auflagefläche 9 auf.

Die Figur 2 zeigt schematisch eine Seitenansicht der Lagerbox 1 gemäß Figur 1 zum Befüllen mit großvolumigen Schaumstoffblöcken 10, die auf einer Beladevorrichtung 11 zum Beladen der Lagerbox 1 angeordnet ist. Die Beladevorrichtung 11 weist angetriebene Förderelemente 12, hier auf Ständern 13 angeordnete Transportrollen auf. In Richtung der Pfeile 14 wird die Lagerbox 1 derart auf der Beladevorrichtung 11 abgesetzt, dass die Förderelemente 12 zwischen den Auflageflächen 7 der Laschen 6 zu liegen kommen, wobei die unteren Auflageflächen 7 der Laschen 6 unterhalb der Auflagen der Förderelemente 12 liegen. Nun kann der Schaumstoffblock 10 von einem Zuführförderer 15, beispielsweise einem Bandförderer in Richtung des Doppelpfeiles 16 in die oder aus der Lagerbox 1 mittels der angetriebenen Förderelemente 12 gefördert werden. Durch die versenkte Anordnung der Lagerbox 1 in der Beladevorrichtung 11 kann das Beladen der Lagerbox 1 einfach und sicher vonstattengehen.

In der Figur 3 ist die Lagerbox 1 gemäß Figur 2 mit der Beladevorrichtung 11 in Vorderansicht dargestellt, aus der ersichtlich wird, dass der Schaumstoffblock 10 nur auf den Förderelementen 12 aufliegt und über den Laschen 6 schwebt.

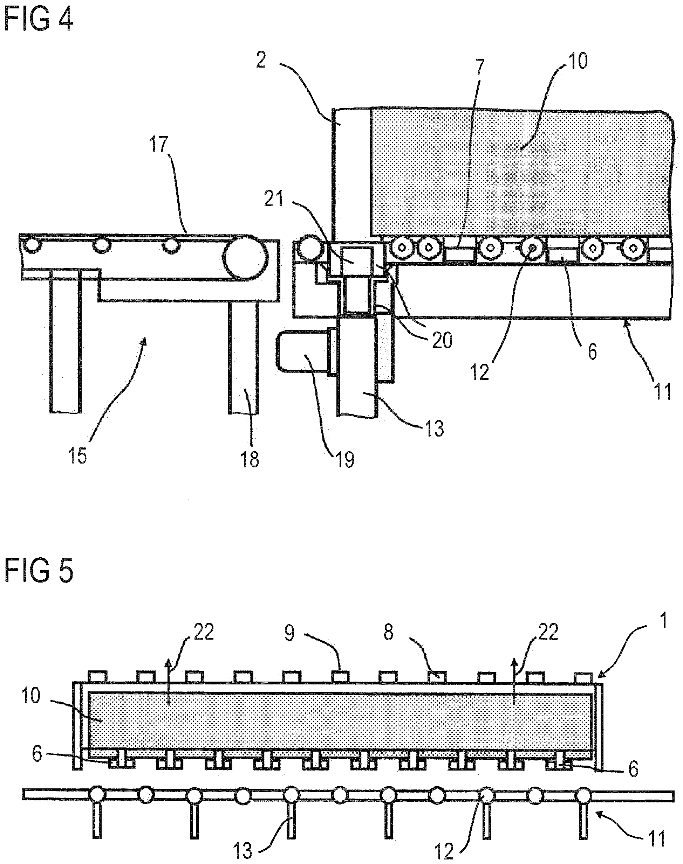

Die Figur 4 zeigt im Detail den Übergang von dem Zuführförderer 15 auf die Beladevorrichtung 11. Der Zuführförderer 15 weist ein Transportband 17 auf, das von einer Tragkonstruktion 18 gehalten wird. Die Förderelemente 12 der Beladevorrichtung 11 und das Transportband 17 liegen auf gleicher Höhe, so dass der Schaumstoffblock 10 ungehindert in die Lagerbox 1 geführt werden kann. Die durch die Laschen 6 gebildete untere Auflagefläche 7, der Boden der Lagerbox 1, liegt dabei tiefer als die Oberkante der Förderelemente 12 der Beladevorrichtung 11, so dass der Schaumstoffblock 10 beim Beladen der Lagerbox 1 nur auf den Förderelementen 12 selbst aufliegt und verschoben werden kann.

Ein beispielsweise an einem der Ständer 13 angebrachter Motor 19 treibt die Förderelemente 12 der Beladevorrichtung 11 an. Der Ständer 13 weist Eckbeschläge 20 auf, in die zur sicheren Ablage der Lagerbox 1 auf der Beladevorrichtung 11 Kupplungsadapter 21 eingreifen, die mit den Frontrahmen 2 in Verbindung stehen.

In der Figur 5 ist die von der Beladevorrichtung 11 in Richtung der Pfeile 22 abgehobene Lagerbox 1 zum Transport in ein Bodenlager 23 dargestellt. Da die Laschen 6 den Schaumstoffblock 10 von den Förderelementen 12 abheben, liegt der Schaumstoffblock 10 während des Transports der Lagerbox 1 kurzfristig nur auf den unteren Auflageflächen 7 der Laschen 6 auf.

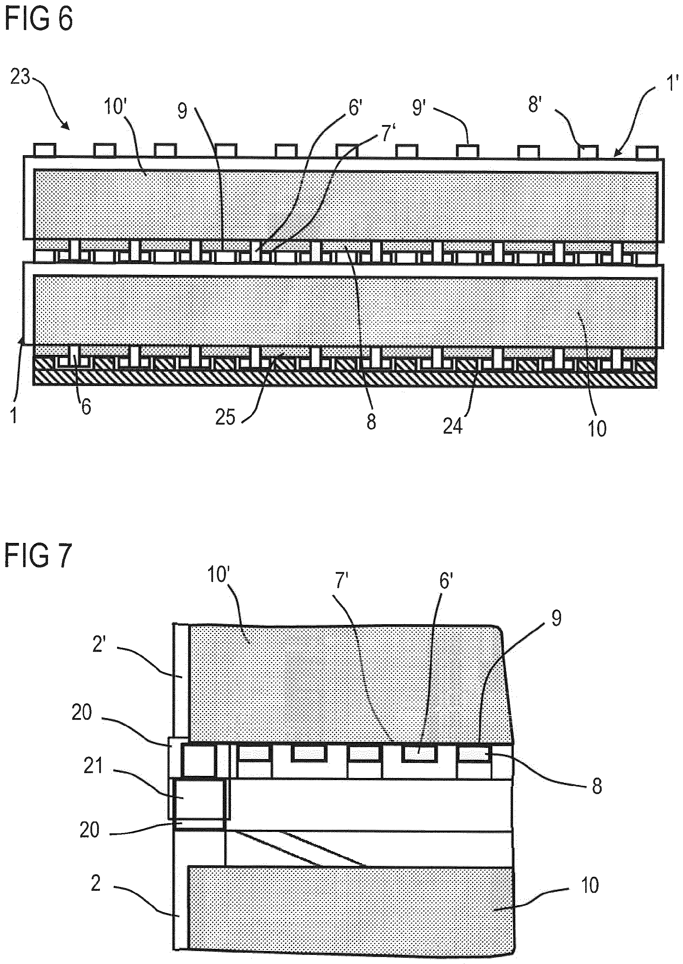

Die Figur 6 zeigt nun ein Bodenlager 23, bei dem eine Lagerbox 1 als unterste Schicht auf einem Lagerplatz 24 aufgestellt ist, der mit Auflagen 25 als Auflagen für den Schaumstoffblock 10 versehen ist. Diese Auflagen 25 passen genau zwischen unteren Auflageflächen 7 der Laschen 6, so dass sich für den Schaumstoffblock 10 eine gemeinsame, nahezu durchgehende Auflagefläche ergibt, da die Oberseiten der Auflagen 25 die durch die untere Auflagefläche 7 gebildete Bodenfläche der Lagerboxen 1 vergrößert.

Auf diese Lagerbox 1 ist eine zweite Lagerbox 1' abgestellt, wobei die oberen Auflageflächen 9 der Querstreben 8 zwischen unteren Auflageflächen 7' der Laschen 6' liegen, so dass sich auch für den Schaumstoffblock 10' eine gemeinsame, im Wesentlichen durchgehende Auflagefläche ergibt. Auf diese beiden Lagerboxen 1 und 1' kann nun die in der Figur 5 von der Beladevorrichtung 11 abgehobene Lagerbox 1 gesetzt werden, wobei die Querstreben 8' den Platz zwischen den Laschen 6 der dritten Lagerbox 1 ausfüllen. Auf diese Weise können auch mehrere Stapel von Lagerboxen 1 nebeneinander angeordnet werden, so dass sich ein großes beispielsweise Reaktionslager mit vielen einzelnen Fächern ergibt, in dem die großvolumigen Schaumstoffblöcke 10 und 10' nach dem Schäumvorgang genügend Zeit haben, ohne zu verformen auszuhärten und bis zu ihrer weiteren Verarbeitung lagern können.

Die Oberseite der Auflagen 25 des Lagerplatzes 24 vergrößert die Bodenfläche der unteren oder ersten Lagerbox 1, während die Oberseite der unteren oder ersten Lagerbox 1 die Bodenfläche der oberen oder zweiten Lagerbox 1' zu einer nahezu nahtlosen durchgehenden Auflagefläche vergrößert. Die Negativ- und Positiv-Erhebungen der Lagerboxen 1 durch die Laschen 6 und Querstreben 8 ergeben beim Stapeln eine ebene Auflagefläche 7 und 9, die zum Ausreifen der Schaumstoffblöcke dient.

In der Figur 7 ist ein Ausschnitt der Anordnung gemäß Figur 6 mit den beiden aufeinander gestellten Lagerboxen 1 und 1' sowie den Schaumstoffblöcken 10 und 10' im Detail dargestellt. Die beiden Lagerboxen 1 und 1' stehen im Wesentlichen mit ihren Frontrahmen 2 und 2' aufeinander, wobei diese die Eckbeschläge 20 aufweisen, in die zur sicheren Ablage der Lagerbox 1' auf der Lagerbox 1 die Kupplungsadapter 21 eingreifen. Der Schaumstoffblock 10' liegt jetzt voll auf der unteren Auflagefläche 7' der Laschen 6' der oberen Lagerbox 1' und der oberen Auflagefläche 9 der Querstreben 8 der unteren Lagerbox 1 auf.

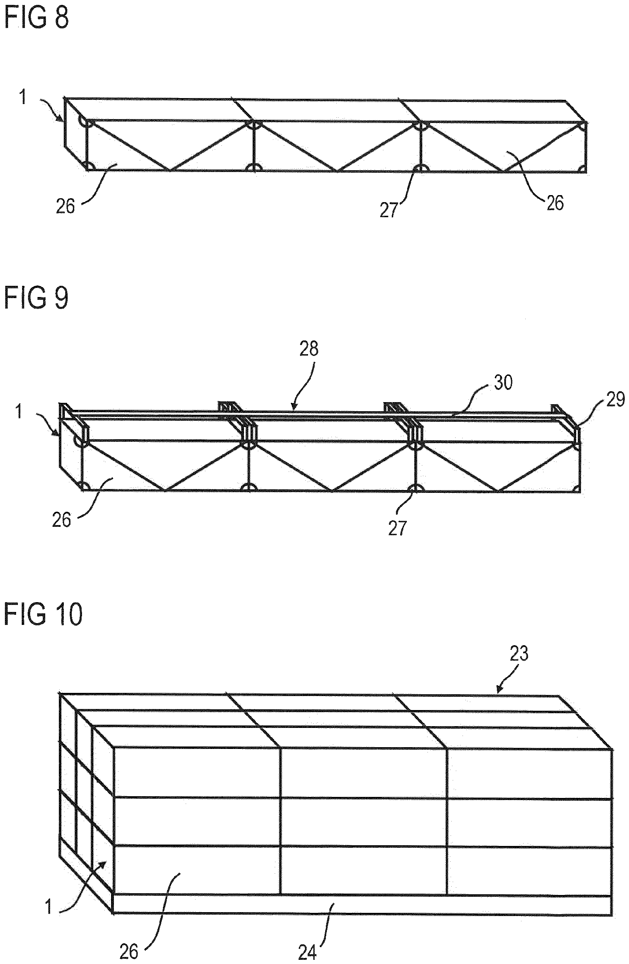

Die Figur 8 zeigt schematisch eine aus Modulen 26 zusammengestellte Lagerbox 1, die mit Hilfe von Verbindungsmitteln 27 zumindest an den Ecken der Module 26 miteinander verbunden sind. Dadurch lassen sich auf einfache Weise unterschiedliche und auch große Längen der Lagerboxen 1 erreichen. Die Verbindungsmittel 27 können Schraubverbindungen oder aber ein bei Containern auf Containerschiffen bewährtes oder leicht abgewandeltes Bolzen-Lasche-Verbindungssystem sein. Die Module 26 sind genauso wie die einteiligen Lagerboxen 1 mit Laschen 6 und Querstreben 8 zur Bildung einer großen nahezu nahtlosen Auflagefläche (7, 9) für die großvolumigen Schaumstoffblöcke 10 versehen.

In der Figur 9 ist schematisch ein Geschirr 28 zum Transport der aus Modulen 26 bestehenden Lagerboxen 1 mittels eines nicht dargestellten Kranes abgebildet, das aus Querträgern 29, die an den Ecken der Module 26 beispielsweise eingehakt sind, und die Querträger 29 verbindenden Längsträger oder Traverse 30 besteht. Ein derartiger Transport eines Containers mit Hilfe eines Krans ist beispielsweise in der EP 0 699 164 B1 beschrieben.

Sind die aus den Modulen 26 bestehenden Lagerboxen 1 ausreichend biegestabil könnten z.B. die beiden äußeren oder aber die beiden inneren Querträger 29 am Geschirr 28 eingespart werden. Selbstverständlich können die Lagerboxen 1 auch von zwei nicht dargestellten Kränen deren Geschirr nur jeweils einen Querträger 29 aufweist gehändelt werden.

Die Figur 10 zeigt vereinfacht ein Bodenlager 23, das mehrere aus einer Anzahl von Modulen 26 erstellte Lagerboxen 1 aufgenommen hat. Mehrere Lagerboxen 1 stehen dabei nebeneinander als unterste Schicht auf den anhand Figur 5 beschriebenen Lagerplätzen 24, so dass sich auch für die untersten Lagerboxen 1 eine große nahezu nahtlose Auflagefläche für die großvolumigen Schaumstoffblöcke 10 ergibt.

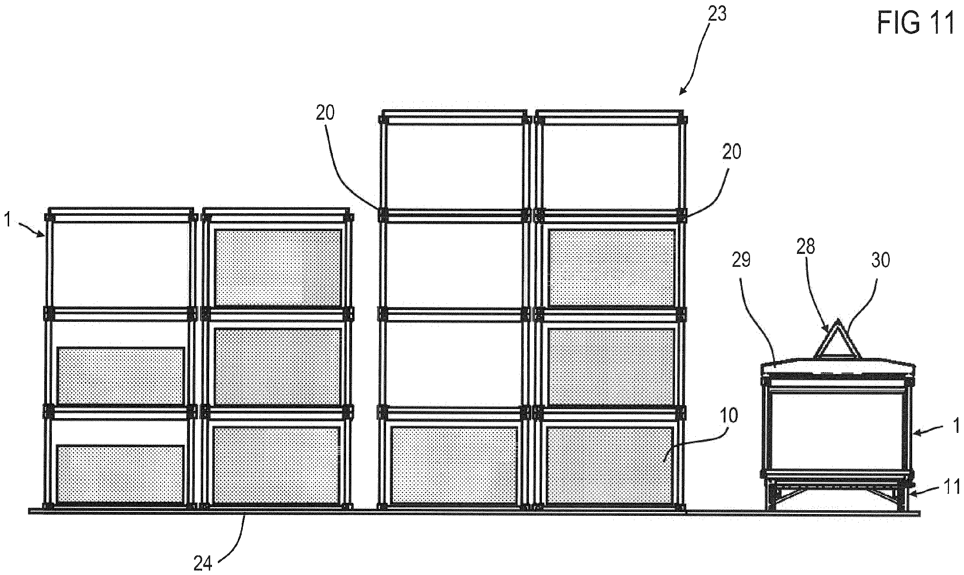

In der Figur 11 ist schematisch das Bodenlager 23 mit einer zu füllenden Lagerbox 1 in Frontansicht dargestellt, die auf der Beladevorrichtung 11 aufgesetzt ist. Oben auf der Lagerbox 1 ist das Geschirr 28 zum Transport der Lagerbox 1 mittels eines nicht dargestellten Kranes angeordnet, das aus den an den Eckbeschlägen 20 eingehakten Querträgern 29 und dem Längsträger 30 besteht. Die Lagerplätze 24 nehmen die ggf. aus Modulen 26 aufgebauten Lagerboxen 1 derart auf, dass in bekannter Weise die großvolumigen Schaumstoffblöcke 10 flach aufliegen. Das Bodenlager 23 besteht aus mehreren übereinander gestapelten Lagerboxen 1, die gemäß den Ausführungen zu Figur 7 von den Eckbeschlägen 20 und Kupplungsadaptern 21 gehalten werden.

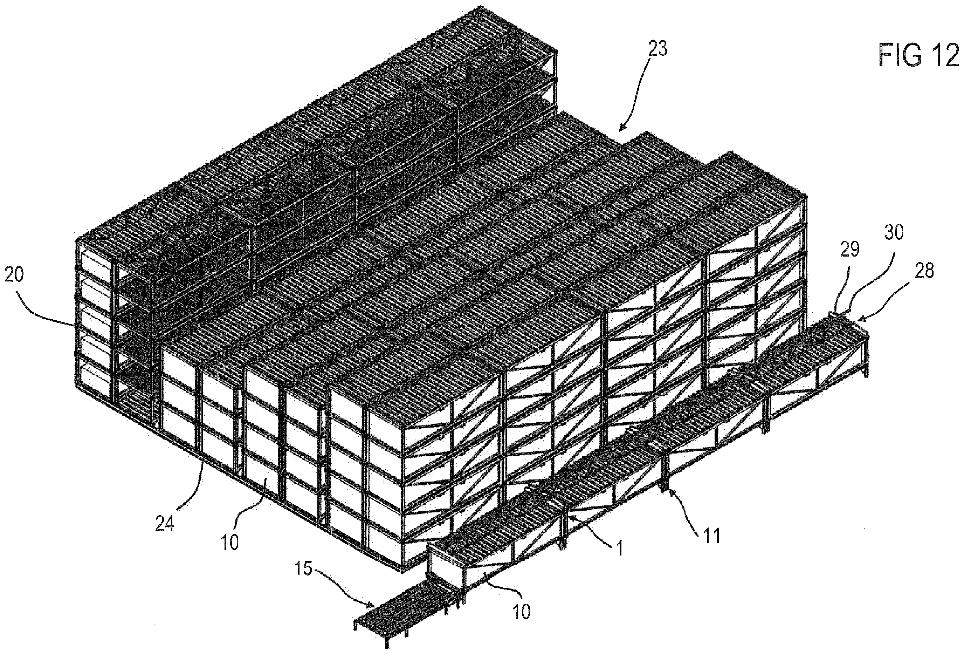

Die Figur 12 zeigt in einer Übersicht die gesamte erfindungsgemäße Vorrichtung mit dem Zuführförderer 15, der Beladevorrichtung 11 mit aufgesetzter Lagerbox 1 sowie dem Bodenlager 23. Von dem Zuführförderer 15 wurde ein großvolumiger Schaumstoffblock 10 nach dem Schäumvorgang in die auf der Beladevorrichtung 11 befindliche Lagerbox 1 eingebracht, indem der Schaumstoffblock 10 erst von dem Transportband 17 des Zuführförderers 15 und dann von den Förderelementen 12 der Beladevorrichtung 11 in die Lagerbox 1 befördert wird. Nun kann mittels eines nicht dargestellten Krans die Lagerbox 1 an dem Geschirr 28 erfasst werden und an beliebiger Stelle auf dem Bodenlager 23 als Reaktionslager zur Aushärtung abgesetzt werden, wobei die Kupplungsadapter 21 in die Eckbeschläge 20 zur sicheren Ablage der Lagerboxen 1 aufeinander eingreifen.

Zusammenfassend ist festzustellen, dass das neue Lagerkonzept im Kern auf einer einfachen Lagerbox 1, beruht, die aus definierten Modulen 25 gefertigt sein kann. Diese Lagerbox 1 ist so aufgebaut, dass sie über eine entsprechend gestaltete Beladevorrichtung 11 beladen und dann mit einem handelsüblichen Kran und einem Geschirr 28 als Greifer oder einem mobilen Hubsystem, wie z.B. einem Flurförderzeug, Gabelstapler oder dergleichen transportiert werden kann. Der Greifer kann an die Greifsysteme für Frachtcontainer angelehnt sein. Zur Lagerung werden diese Lagerboxen 1 einfach aufeinandergestapelt, beispielsweise bis zu fünf Etagen. Die Lagerboxen 1 können untereinander wie Container auf Containerschiffen mit dem dort bewährten oder leicht abgewandelten Bolzen-Lasche-System verbunden werden, das beispielsweise in der EP 0 699 164 B1 beschrieben ist.

Die Lagerboxen 1 haben Laschen 6 mit einer definiert ausgeprägten Geometrie, die beim Beladen mit dem Schaumstoffblock 10 zwischen den Förderelementen 12 der Beladevorrichtung 11 eintauchen. An der Oberseite der Lagerboxen 1 sind die Querstreben 8 genauso versetzt angeordnet, dass bei einer Stapelung der Lagerboxen 1 sich für die großvolumigen Schaumstoffblöcke 10 eine nahezu durchgehende Auflagefläche im Block- oder Wabenlager 23 ergibt. Diese Doppelabstützung bei der Lagerung ist für besonders weich-elastische und insbesondere die frischen, noch nicht ausgereiften Schaumstoffblöcke 10 sehr wichtig, um die Formstabilität der Schaumstoffblöcke 10 zu gewährleisten. Somit wird durch die erfindungsgemäße Vorrichtung ein optimales Handling der Frischblöcke ohne physikalische Beeinträchtigung insbesondere für anspruchsvolle Schäume gewährleistet.

Aus Gründen der Platzersparnis bei der Lagerung und dem Transport nicht verwendeter Lagerboxen 1, und ggf. um die Schaumstoffblöcke für einen weiteren Transport zu komprimieren können die Lagerboxen 1 zumindest in ihrer Höhe variabel einstellbar ausgebildet sein. Hierfür können Verschiebe- oder Klappmechanismen eingesetzt werden.

### Bezugszeichenliste

- 1: Lagerbox
- 2: Frontrahmen
- 3: Seitenteile
- 4: Längsstreben
- 5: Diagonalstreben
- 6: Laschen
- 7: untere Auflageflächen
- 8: Querstreben
- 9: obere Auflageflächen
- 10: Schaumstoffblock
- 11: Beladevorrichtung
- 12: Förderelemente
- 13: Ständer
- 14: Pfeile
- 15: Zuführförderer
- 16: Doppelpfeil
- 17: Transportband
- 18: Tragkonstruktion
- 19: Motor
- 20: Eckbeschläge
- 21: Kupplungsadapter
- 22: Pfeile
- 23: Bodenlager
- 24: Lagerplatz
- 25: Auflagen
- 26: Module
- 27: Verbindungsmittel
- 28: Geschirr
- 29: Querträger
- 30: Längsträger

## Patentansprüche

1. Vorrichtung zum Lagern und Transport von großvolumigen Schaumstoffblöcken (10) mit einer Fördervorrichtung und einem Lager wie einem Reaktionslager für die Schaumstoffblöcke (10) nach dem Schäumvorgang und nach dem Ablängen,
**gekennzeichnet durch**
mindestens eine mobile Lagerbox (1) zur Aufnahme mindestens eines Schaumstoffblocks (10) an einer Beladeposition, und eine Transportvorrichtung zum Transport der Lagerbox (1) von der Beladeposition in mindestens ein Bodenlager (23).

2. Vorrichtung nach Anspruch 1,
**dadurch gekennzeichnet,**
**dass** die Vorrichtung einen Zuführförderer (15) und in der Beladeposition eine Beladevorrichtung (11) aufweist welcher die mindestens eine mobile, stapelbare Lagerbox (1, 1') zuortenbar ist, wobei die Schaumstoffblöcke (10) mittels des Zuführförderers (15) und der Beladevorrichtung (11) in die Lagerboxen (1, 1') einbringbar sind, die dann nach Einbringen der Schaumstoffblöcke (10) von der Transportvorrichtung im Bereich des mindestens einen Bodenlagers (23) ablegbar, auch übereinander stapelbar sind.

3. Vorrichtung nach Anspruch 1 oder 2,
**dadurch gekennzeichnet,**
**dass** die Lagerboxen (1, 1') in ihrem Bodenbereich im Abstand zueinander angeordnete Laschen (6, 6') mit nach oben gerichteten, unteren Auflageflächen (7, 7') aufweisen, dass die Lagerboxen (1, 1') in ihrem Deckenbereich Querstreben (8, 8') aufweisen, die nach oben gerichtete obere Auflageflächen (9, 9') aufweisen und dass die Querstreben (8, 8') einer ersten Lagerbox (1) beim Aufeinanderstapeln der Lagerboxen (1, 1') in die Zwischenräume der Laschen (6, 6') einer zweiten Lagerbox (1') zur Bildung einer gemeinsamen Auflagefläche eingreifbar sind.

4. Vorrichtung nach Anspruch 3,
**dadurch gekennzeichnet,**
**dass** zum Befüllen der Lagerbox (1) mit großvolumigen Schaumstoffblöcken (10) eine Lagerbox (1) auf die Beladevorrichtung (11) mit Förderelementen (12) aufsetzbar ist, die derart weit in die Zwischenräume der Laschen (6) eingreifen, dass die Schaumstoffblöcke (10) beim Einführen in die Lagerbox (1) nur auf den Förderelementen (12) aufliegen.

5. Vorrichtung nach einem der Ansprüche 1 bis 4,
**dadurch gekennzeichnet,**
**dass** die Lagerboxen (1, 1') und die Beladevorrichtung (11) Eckbeschläge (20) aufweisen, die beim Stapeln bzw. Aufsetzen mittels Kupplungsadapter (21) zur Sicherung ineinander eingreifen.

6. Vorrichtung nach einem der Ansprüche 3 bis 5,
**dadurch gekennzeichnet,**
**dass** in dem mindestens einem Bodenlager (23) mindestens ein Lagerplatz (24) vorgesehen ist, welcher Erhebungen aufweist, die als Auflagen (25) für die Schaumstoffblöcke (10) derart in die Zwischenräume der Laschen (6) eingreifen, dass die Auflagen (25) die durch die untere Auflagen (7) gebildete Bodenfläche der Lagerboxen (1) derart vergrößert, dass sich für den Schaumstoffblock (10) eine gemeinsame Auflagefläche ergibt.

7. Vorrichtung nach einem der Ansprüche 1 bis 6,
**dadurch gekennzeichnet,**
**dass** die Lagerboxen (1, 1') aus mindestens einem Modul (26) bestehen, wobei eine aus mehreren Modulen (26) bestehende Lagerbox (1, 1') durch zwischen den Modulen (26) anortenbare Verbindungsmittel (27) zusammenfügbar sind.

8. Vorrichtung nach Anspruch 7,
**dadurch gekennzeichnet,**
**dass** zum Transport der Lagerbox (1) mindestens ein Modul (26) mittels eines Geschirrs (28) erfassbar ist.

9. Vorrichtung nach einem der Ansprüche 1 bis 8,
**dadurch gekennzeichnet,**
**dass** die Lagerboxen (1) zumindest in ihrer Höhe variabel einstellbar ausgebildet sind.
